# EUROPÄISCHE PATENTSCHRIFT

(11) **EP 1 076 404 B1**
(45) Veröffentlichungstag und Bekanntmachung des Hinweises auf die Patenterteilung: **16.09.2009**
(21) Anmeldenummer: 00114787.5
(22) Anmeldetag: 10.07.2000
(51) Int. Cl.: H02M 3/335, H02M 1/00

(54) **Schaltungsanordnung zur dynamischen Strombegrenzung einer Stromversorgung**
Circuit for dynamical current limitation of a power source
Circuit pour la limitation dynamique de courant d'une alimentation de puissance

(30) Priorität: 13.08.1999 DE 19938484
(43) Veröffentlichungstag der Anmeldung: 14.02.2001
(73) Patentinhaber: Fujitsu Siemens Computers GmbH, 80807 München (DE)
(72) Erfinder: Busch, Peter, 86179 Augsburg (DE)
(74) Vertreter: Epping - Hermann - Fischer

(56) Entgegenhaltungen:
- DE-A- 3 121 638
- DE-A- 19 730 220
- US-A- 626 755
- US-A- 4 761 702
- US-A- 4 928 220
- US-A- 4 985 818
- US-A- 5 627 733
- US-A- 5 903 447
- PATENT ABSTRACTS OF JAPAN vol. 016, no. 360 (E-1243), 4. August 1992 (1992-08-04) & JP 04 112673 A (MICRON KIKI), 14. April 1992 (1992-04-14)

## Beschreibung

Die Erfindung betrifft eine Schaltungsanordnung zur dynamischen Strombegrenzung einer Stromversorgung mit einem Regelteil, das über ein Stellglied wenigstens eine Ausgangsspannung auf einer Sekundärseite der Stromversorgung aus einer Eingangsspannung auf einer Primärseite der Stromversorgung regelt, mit Mitteln zum Erfassen von Momentanströmen auf Ausgängen der Stromversorgung, und mit Mitteln zum Strombegrenzen auf den Ausgängen der Stromversorgung in Abhängigkeit von den ermittelten Strommomentanwerten, wobei zum Steuern der Strombegrenzungsmittel den Strombegrenzungsmitteln Mittel zum Addieren jeweils zweier elektrischer Größen vorgeschaltet sind, wobei Mittel zum Erzeugen eines jeweiligen Mittelwertes aus einem jeweiligen erfassten Strommomentanwertes unter Verwendung einer jeweils angepassten Zeitkonstante vorgesehen sind.

Für Personal Computer (PC) und ähnliche Geräte sind heute Stromversorgungen eingesetzt, die zum Schutz der Stromversorgung und des Verbrauchers eine fest eingestellte Strombegrenzung haben.

Eine Stromversorgung mit einer fest eingestellten Strombegrenzung ist beispielsweise aus: Beckmann, Getaktete Stromversorgung, Franzis Arbeitsbuch, 1990, Seiten 38 bis 44, bekannt. Die dort beschriebene Strombegrenzung arbeitet mit einem eine kurze Zeitkonstante aufweisenden Zeitglied. Die Zeitkonstante ist in der Weise gewählt, dass ein sofortiges Ansprechen der Strombegrenzung bei auftretenden Stromspitzen nicht auftritt. Bei über Stromspitzen hinausgehenden Zeitspannen erfolgt jedoch eine Aktivierung der Strombegrenzung.

Eine weitere Stromversorgung mit Strombegrenzung offenbart US 5,627,733.

Die Strombegrenzung ist um einen Sicherheitsabstand höher als ein höchster kurzzeitig entnommener Stoßstrom eingestellt. Die Stromversorgungsbauteile müssen diesen Strom auf Dauer liefern können, obwohl ein Verbraucher diesen Stoßstrom in der Praxis auf Dauer nicht benötigt. Ein damit verbundenes Problem sind die Produktsicherheitsüberprüfungen, die diesen erhöhten Strom auch im Dauerbetrieb und im Fehlerfall testen.

Zur Realisierung der fest eingestellten oder auch statischen Strombegrenzung wird eine Erfassung des momentanen primär- oder sekundärseitigen Stromes durchgeführt, der mit einem Sollstrom verglichen wird. Die Erfassung des momentanen Stromes erfolgt einzeln pro Ausgang der Stromversorgung oder für alle Ausgänge gemeinsam. Der oder die erfassten momentanen Ströme speisen den oder die Strombegrenzungs- bzw. Stromsteuereingänge der jeweiligen zugeordneten Strombegrenzungen.

Die oben erwähnten Personal Computer oder ähnlichen Geräte haben unabhängig voneinander arbeitende Teilkomponenten. Solche Teilkomponenten sind beispielsweise eine Grafikkarte, eine Festplatte, ein CD-Laufwerk, ein Disketten-Laufwerk, ein Chipkartenleser und so weiter. Die Teilkomponenten ihrerseits weisen dynamische Lastverteilungskurven während des Betriebs auf. Wegen der unabhängigen Arbeitsweise und den dynamischen Lastverteilungskurven der Teilkomponenten ist es möglich, dass sie alle gleichzeitig mit ihrer höchsten oder zumindest mit einer hohen Last auf die Stromversorgung wirken. Derartige Situationen sind zwar, wie oben schon erwähnt, nicht der Regelfall, müssen aber als möglicher Einsatzfall berücksichtig werden.

Durch die dynamischen Lastkurven der Teilkomponenten kann es in der Praxis vorkommen, dass von der Stromversorgung ein kurzzeitiger Stromstoß von beispielsweise 5 A über eine Zeitdauer von 10 bis 100 ms, ein erhöhter Strombedarf von zum Beispiel 3 A über eine Zeitdauer von 1 s und ansonsten ein Dauerstrom von 1 A zu bewältigen sind.

Beim Stand der Technik ist es bekannt, eine Stromversorgung, die zum Beispiel für einen Dauerstrom von 1 A vorgesehen ist, so zu bauen, dass die Strombegrenzung bei 2 A eingestellt ist mit einer Zeitkonstante für kurzzeitig höhere Stromspitzen. Damit eine solche Stromversorgung die oberen Werte bewältigen kann und das gewünschte Stoßstromverhalten erreicht, müssen die Strombegrenzungsschwelle und die Bauteile überdimensioniert werden. Möglich ist auch Temperaturüberwachungen an Stelle von Überdimensionierungen vorzusehen, durch die kritische Temperaturen mitüberwacht werden und die Strombegrenzung im Bedarfsfall aktivieren.

Aufgabe der vorliegenden Erfindung ist es, eine Stromversorgung der eingangs genannten Art anzugeben, durch die ohne Überdimensionierungen von Strombegrenzungsschwellen und Bauteilen bzw. ohne zusätzliche Temperaturüberwachungen das oben angesprochene gewünschte Stoßstromverhalten erreicht wird.

Gelöst wird diese Aufgabe erfindungsgemäß durch eine Stromversorgung, die die Merkmale des Anspruchs 1 aufweist.

Danach weist die Stromversorgung neben den üblichen Bauteilen Mittel auf, durch die der Strommomentanwert vor den Strombegrenzungsmitteln mit einer ersten Gewichtung beaufschlagt und zusammen mit dieser ersten Gewichtung mit einem, mit einer zweiten Gewichtung beaufschlagten und um eine Zeitkonstante verzögerten Mittelwert des Strommomentanwertes addiert ist. Durch die Gewichtungen können die Bedeutungen der einzelnen Werte der Addition festgelegt werden, die wiederum dafür verantwortlich sind, auf welchen Dauerstromwert die Strombegrenzung eingestellt ist. Die Zeitkonstante bei der Mittelwertbildung beeinflusst dabei die Zeitspanne, ab der auf die kurzzeitigen Stromüberhöhungen reagiert werden soll.

Insgesamt wird damit der Umstand ausgenutzt, dass elektronische Bauteile bei Überlastung nicht sofort zerstört werden, sondern erst nach einer Verzögerungszeit, die von der jeweiligen Situation abhängt. Hier sind größenordnungsmäßig Zeiten möglich von 0,5 bis 50 Sekunden. Es wird mit diesen Maßnahmen vorteilhaft erreicht, dass eine Stromversorgung, die beispielsweise ohne Probleme 1 A Strom liefern kann, beispielsweise 1 Sekunde 3 A Strom und beispielsweise 10 bis 100 ms 5 A Strom liefern kann, ohne dass dadurch die Bauteile gefährdet sind. Eine Überdimensionierung von Strombegrenzungsschwellen oder Bauteilen kann entfallen. Die Produktsicherheitsprüfungen werden dadurch vereinfacht.

Vorteilhafte Ausgestaltungen der Erfindung sind Gegenstand von Unteransprüchen.

Danach können die Gewichtungen und die Bildung einer Zeitkonstanten mit einfachsten Mitteln wie zum Beispiel Widerständen und Kondensatoren realisiert werden.

Ein gesteuerter Schalter an vorbestimmter Stelle in der Stromversorgung mit entsprechender Ansteuerung ermöglicht den Einsatz der erfindungsgemäßen Maßnahmen in Schaltnetzteilen.

Nachfolgend wird die Erfindung anhand einer Zeichnung näher erläutert. Darin zeigen
- Figur 1: ein Ausführungsbeispiel einer Stromversorgung gemäß der Erfindung in Prinzipdarstellung mit einer Anwendung auf der Primärseite,
- Figur 2: eine Detaillierung der Stromversorgung nach Figur 1 in den wesentlichen Elementen, und
- Figur 3: eine Detaillierung der Stromversorgung nach Figur 1 in wesentlichen Elementen mit einer Anwendung für geschaltete Stromversorgungen.

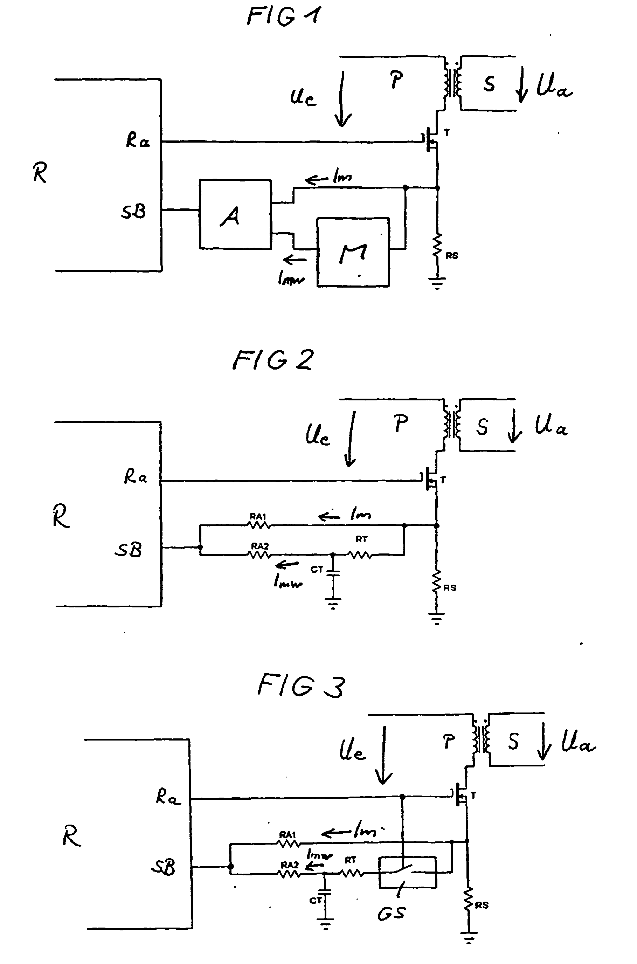

In den Figuren 1 bis 3 sind gleiche Schaltungsteile mit dem gleichen Bezugszeichen versehen. Die Stromversorgung ist in allen Figuren nur prinzipiell dargestellt. Die Tatsache, dass die Grundstruktur der Stromversorgung in allen Figuren gleich ist, soll nicht als Hinweis darauf verstanden werden, dass jeweils die gleiche Stromversorgung vorliegt. Figur 1 ist eine übergeordnete Figur, während die Figuren 2 und 3 Spezifizierungen sind. Dabei bezieht sich die Figur 2 auf eine linear geregelte Stromversorgung, während sich Figur 3 auf ein Schaltnetzteil bezieht. In diesem Sinne ist Figur 1 so allgemein aufzufassen, dass unter der dargestellten Stromversorgung sowohl eine linear geregelte Stromversorgung als auch ein Schaltnetzteil zu sehen ist. Ebenso sind die erfindungsgemäßen Maßnahmen, wenn sie auch in den Figuren primärseitig angeordnet sind, nicht so zu verstehen, dass sie nur auf der Primärseite der Stromversorgungen einsetzbar sind. In anderen Ausführungsformen bei entsprechender Realisierung können diese Maßnahmen auch auf der Sekundärseite angeordnet sein.

Die den Figuren 1 bis 3 zugrunde liegende prinzipielle Stromversorgung hat einen Regelteil R mit einem Regelausgang Ra. In dem Regelteil R ist eine Strombegrenzung SB integriert und weist zu diesem Zweck einen entsprechenden Eingang für ein entsprechendes Steuersignal auf. Am Regelausgang Ra ist ein Stellglied T mit seinem Steuereingang angeschlossen. Das Stellglied T beeinflusst die Primärseite P der Stromversorgung in Abhängigkeit seiner Ansteuerung durch das Regelteil R in einer Weise, dass eine Eingangsspannung Ue in eine Ausgangsspannung Ua auf der Sekundärseite S der Stromversorgung umgeformt wird. Diese Umformung könnte, wie gesagt, durch eine lineare aber auch durch eine geschaltete Regelung vorgenommen sein.

Damit eine Strombegrenzung realisiert werden kann, weist die Stromversorgung Mittel RS zum Erfassen von Strommomentanwerten Im auf. In den Figuren 1 bis 3 sind diese Mittel durch einen entsprechenden Strommesswiderstand im gesteuerten Zweig des Stellgliedes T bezogen auf Masse realisiert. An dem Strommesswiderstand fällt eine Spannung ab, die bei entsprechender Bewertung als stellvertretende Größe für den Momentanstrom auf der Ausgangsseite der Stromversorgung verwendet werden kann.

In diesem Zusammenhang sei darauf hingewiesen, dass die Stromversorgung nicht nur einen Ausgang haben muss, sondern auch weitere Ausgänge haben kann. Die erfindungsgemäßen Maßnahmen können für einen jeweiligen Ausgang vorgesehen sein. Bezüglich der Ermittlung eines Momentanstromes Im ist auch eine Realisierung denkbar, bei der mehrere Ausgänge durch einen Momentanstrom Im repräsentiert sind. In diesem Fall muss die Realisierung den jeweils kritischsten Fall dominierend schalten.

Der Strommomentanwert Im wird nicht direkt auf den Eingang der Strombegrenzung SB geführt, wie beim Stand der Technik, sondern wird auf ein Mittel A; RA1, RA2 zum Addieren zweier elektrischer Größen geführt. Außerdem wird der Strommomentanwert Im auch auf ein Mittel M; CT, RT zum Erzeugen eines Mittelwertes Imw geführt. Der Mittelwert Imw wird um eine Zeitkonstante verzögert gebildet. Das Ergebnis der Mittelwertbildung wird dann als eine zweite elektrische Größe auf die Mittel A; RA1, RA2 zum Addieren zweier elektrischer Größen geführt. Erst das elektrische Ergebnis der Mittel A; RA1, RA2 zum Addieren zweier elektrischer Größen wird dann auf den Eingang der Strombegrenzung SB geführt.

In den Figuren 2 und 3 bestehen die Mittel A; RA1, RA2 zum Addieren zweier elektrischer Größen aus zwei Widerständen RA1 und RA2, die mit jeweils einer ihrer Seiten gemeinsam verbunden sind. Die gemeinsame Verbindung ist weiter mit dem Eingang der Strombegrenzung SB verbunden. Die jeweils anderen Seiten der beiden Widerstände RA1 und RA2 sind jeweils Eingänge einmal für den Strommomentanwert Im und einmal für den Mittelwert Imw des Strommomentanwertes Im.

Die Mittel M; CT, RT zum Erzeugen eines Mittelwertes Imw aus zugehörigen Strommomentanwerten Im bestehen gemäß der Figuren 2 und 3 aus einem RC-Glied mit einem Widerstand RT und einem Kondensator CT. Aufgrund der RC-Glied-Kombination hat die Mittelwertbildung eine Zeitkonstante, die durch die Größe der Einzelelemente des RC-Gliedes bestimmt wird.

In der Figur 3 wird dem Mittel M; CT, RT ein gesteuerter Schalter GS vorgeschaltet, der bei einem Schaltnetzteil dafür sorgt, dass das RC-Glied bei der Mittelwertbildung nur dann aktiv geschaltet ist, wenn das Stellglied T aktiv geschaltet ist. Andernfalls könnte sich das RC-Glied während der inaktiv geschalteten Zeiten des Stellgliedes T über den Strommesswiderstand, in den Figuren durch den Widerstand RS gebildet, entladen. Für die Verhältnisse der Widerstände RS zu RT zu RA1 bzw. RA2 gilt: RS << RT << RA1 bzw. RA2.

Die Funktionsweise der Mittel A; RA1, RA2 zum Addieren zweier elektrischer Größen und der Mittel M; CT, RT zum Erzeugen eines Mittelwertes Imw aus jeweiligen zugehörigen Strommomentanwerten Im wird nachfolgend anhand eines Beispiels näher erläutert. Angenommen werden soll dabei, dass die Stromversorgung für 1 A Dauerstrom ausgelegt ist und die Strombegrenzung auf 2 A festgelegt ist. Betrachtet wird das Beispiel, dass am Ausgang der Stromversorgung zunächst 1 A fließen und anschließend 5 A. In diesen Fällen fällt am Strommesswiderstand RS, wenn dieser beispielsweise 0,1 Ohm hätte, die für die Ausgangsströme stellvertretenden Spannungen von 0,1 V bzw. 0,5 V ab.

Fallen zunächst die 0,1 V Spannung am Strommesswiderstand RS ab, und zwar genügend lange, dann wird der Kondensator CT des RC-Gliedes auf 0,1 V aufgeladen. Wird ferner vorausgesetzt, dass die Widerstände RA1 und RA1 des nachfolgenden Addierers gleich groß sind, dann erfolgt eine Mittelwertbildung, bei der jeder Wert zu 50 % beiträgt. Es ergibt sich in dieser Situation eine Spannung von 0,1 V als Strommomentanwert, eine Spannung von 0,1 V als Kondensatorspannung und eine Mittelwertspannung von 0,1 V. Das heißt, der addierte Strom im Strombegrenzungseingang der Strombegrenzung SB bzw. die entsprechende Spannung hierfür beträgt 0,1 V. Das Ergebnis hiervon ist, dass bei einem Dauerstrom von 1 A kein Eingriff durch die erfindungsgemäßen Maßnahmen erfolgt.

Fließt im Ausgang der Stromversorgung 5 A auf Dauer, dann fällt am Strommesswiderstand RS eine entsprechende Spannung von 0,5 V ab. Als Mittelwert stellt sich ein Wert von 0,5 V ein. Am Eingang der Strombegrenzung SB liegt in diesem Fall eine Spannung von 0,5 V an. Ist Strombegrenzungsschwelle der Strombegrenzung beispielsweise auf 0,2 V eingestellt, dann wird die Strombegrenzung ansprechen. In dem Wert von 0,2 V für die Spannung am Eingang der Strombegrenzung SB ist ein Sicherheitsabstand, beispielsweise 0,05 V, einkalkuliert.

Beim Übergang von 1 A Stromfluss am Ausgang der Stromversorgung auf 5 A steigt der Spannungsabfall am Strommesswiderstand RS von 0,1 V auf 0,5 V an. Der Strommomentanwert Im beträgt 0,5 V. Am Kondensator CT liegen noch 0,1 V Spannung an. Die Mittelwertbildung stellt sich auf 0,3 V ein. Diese Spannung ist am Eingang der Strombegrenzung SB zu hoch und die Strombegrenzung wird aktiv.

Damit ein kurzzeitiger Stromfluss in dieser Höhe am Ausgang der Stromversorgung unkritisch bleibt, ist es notwendig, dass das Verhältnis bezüglich der Widerstände RA1 und RA2 entsprechend eingestellt wird. Die Einstellung muss in der Weise erfolgen, dass die Spannung am Eingang der Strombegrenzung SB nicht über 0,15 V hinausgeht. Dies wird erreicht bei einem Strommomentanwert Im von 0,5 V, einem Augenblicksmittelwert von 0,1 V und einer Spannung am Eingang der Strombegrenzung SB von 0,15 V, wenn das Verhältnis der Widerstände RA1 und RA2 1 zu 7 ist.

Da am RC-Glied CT, RT der Strommomentanwert Im ebenfalls anliegt, wird sich das RC-Glied ebenfalls mit einer dem RC-Glied zugrundeliegenden Zeitkonstante von 0,1 V auf 0,5 V aufladen. In dem Augenblick, in dem am Eingang der Strombegrenzung SB eine Spannung von 0,2 V erreicht worden ist, wird die Strombegrenzung einsetzen. Nachdem bei den Widerständen RA1 und RA2 ein Verhältnis von 1 zu 7 eingestellt ist, dürfen am Widerstand RA2 ca. 43 mV abfallen. Am Eingang der Strombegrenzung SB liegen 0,2 V. Die Strombegrenzung wird aktiv, wenn am Kondensator CT eine Spannung von 0,2 V minus 43 mV anliegt.

Zusammenfassend wird ausgeführt, dass eine Spannung vorliegt, die sofort, also ohne Verzögerung auf den Stromistwert reagiert. Ferner liegt eine Spannung vor, die mit einer vorgegebenen Zeitkonstante verzögert auf den Stromistwert reagiert. Die Anteile der Spannungen, mit denen die Spannungen auf den Eingang der Strombegrenzung einwirken sollen, werden über das Verhältnis der Widerstände RA1 und RA2 eingestellt. Damit wird wiederum eingestellt, bis zu welchem Spitzenwert im allerersten Moment die Strombegrenzung SB noch nicht reagieren soll. Das heißt, ohne jede Verzögerung wird die Strombegrenzung SB auf einen vorgegebenen Spitzenwert reagieren. Ist der Spitzenwert aber geringer, dann wird die Zeitverzögerung, je nach Höhe des Spitzenwertes, immer größer. Bezogen auf eine Einstellung der Stromversorgung auf 1 A Ausgangsstrom wird die Strombegrenzung relativ langsam reagieren, wenn ein Ausgangsstrom von zum Beispiel 2 A fließt. Die Strombegrenzung wird aber relativ schnell reagieren, wenn ein Ausgangsstrom von zum Beispiel 5 A fließt.

## Patentansprüche

1. Schaltungsanordnung zur dynamischen Strombegrenzung einer Stromversorgung mit einem Regelteil (R), das über ein Stellglied (T) wenigstens eine Ausgangsspannung (Ua) auf einer Sekundärseite (S) der Stromversorgung aus einer Eingangsspannung (Ue) auf einer Primärseite (P) der Stromversorgung regelt, mit Mitteln (RS) zum Erfassen von Momentanströmen (Im) auf Ausgängen der Stromversorgung, und mit Mitteln (SB) zum Strombegrenzen auf den Ausgängen der Stromversorgung in Abhängigkeit von den ermittelten Strommomentanwerten (Im), wobei zum Steuern der Strombegrenzungsmittel (SB) den Strombegrenzungsmitteln (SB) Mittel (A; RA1, RA2) zum Addieren jeweils zweier elektrischer Größen (Im; Imw) vorgeschaltet sind, von denen jeweils die eine ein erfasster Momentanstromwert (Im) für wenigstens einen ausgewählten Ausgang der Stromversorgung ist, wobei Mittel (M; CT, RT) zum Erzeugen eines jeweiligen Mittelwertes (Imw) aus einem jeweiligen erfassten Momentanstromwertes (Im) unter Verwendung einer jeweils angepassten Zeitkonstante vorgesehen sind, und wobei jeweils die andere elektrische Größe eines Mittels (A; RA1, RA2) zum Addieren zweier elektrischer Größen, von denen die eine ein erfasster Momentanstromwertes (Im) ist, der jeweils dazugehörige Mittelwert (Imw) ist.

2. Schaltungsanordnung nach Anspruch 1, wobei die Mittel (A; RA1, RA2) zum Addieren zweier elektrischer Größen durch zwei jeweilige Widerstände (RA1; RA2) gebildet sind, die mit jeweils einer ihrer Seiten gemeinsam zusammengeschaltet sind und deren jeweilige anderen Seiten jeweilige Eingänge für jeweils eine der elektrischen Größen sind.

3. Schaltungsanordnung nach Anspruch 1 oder 2, wobei die Mittel (M; CT, RT) zur Bildung eines jeweiligen Mittelwertes (Im) durch RC-Glieder gebildet sind.

4. Schaltungsanordnung nach einem der vorherigen Ansprüche, wobei wenigstens einem Mittel (M; CT, RT) zur Bildung von Mittelwerten (Im) ein gesteuerter Schalter (GS) vorgeschaltet ist.

## Claims

1. Circuit arrangement for dynamic current limiting for a power supply with a regulatory portion (R), which uses an actuating element (T) to regulate at least one output voltage (Ua) on a secondary side (S) of the power supply from an input voltage (Ue) on a primary side (P) of the power supply, with means (RS) for detecting instantaneous currents (Im) on outputs of the power supply, and with means (SB) for current limiting on the outputs of the power supply on the basis of the ascertained instantaneous current values (Im), wherein, for the purpose of controlling the current limiting means (SB), the current limiting means (SB) have means (A; RA1, RA2) connected upstream of them for the purpose of adding two respective electrical variables (Im; Imw), a respective one of which is a detected instantaneous current value (Im) for at least one selected output of the power supply, wherein means (M; CT, RT) for producing a respective average (Imw) from a respective detected instantaneous current value (Im) using a respective adjusted time constant are provided, and wherein the respective other electrical variable from a means (A; RA1, RA2) for adding two electrical variables, one of which is a detected instantaneous current value (Im), is the respective associated average (Imw).

2. Circuit arrangement according to Claim 1, wherein the means (A; RA1, RA2) for adding two electrical variables are formed by two respective resistors (RA1; RA2) which have a respective one of their sides connected to one another and the respective other sides of which are respective inputs for a respective one of the electrical variables.

3. Circuit arrangement according to Claim 1 or 2, wherein the means (M; CT, RT) for forming a respective average (Im) are formed by RC elements.

4. Circuit arrangement according to one of the preceding claims, wherein at least one means (M; CT, RT) for forming averages (Im) has a controlled switch (GS) connected upstream of it.

## Revendications

1. Circuit pour la limitation dynamique de courant d'une alimentation de puissance avec un élément de régulation (R), qui par l'intermédiaire d'un actionneur (T), régule au moins une tension de sortie (Ua) d'un côté secondaire (S) de l'alimentation de puissance à partir d'une tension d'entrée (Ue) d'un côté primaire (P) de l'alimentation de puissance, avec des moyens (RS) pour l'enregistrement de courants instantanés (Im) sur des sorties de l'alimentation de puissance, et avec des moyens (SB) pour la limitation de courant sur les sorties de l'alimentation de puissance en fonction des valeurs de courants instantanés (Im) déterminés, dans lequel des moyens (A ; RA1, RA2) pour additionner respectivement deux grandeurs électriques (Im ; Imw) sont branchés en amont des moyens de limitation de courant (SB) pour commander les moyens de limitation de courant (SB), dont respectivement l'une est une valeur de courant instantané (Im) enregistrée pour au moins une sortie sélectionnée de l'alimentation de puissance, dans lequel des moyens (M ; CT, RT) sont prévus pour générer une valeur moyenne (Imw) respective à partir d'une valeur respective de courant instantané (Im) enregistrée en utilisant une constante de temps respectivement adaptée, et dans lequel respectivement l'autre grandeur électrique d'un moyen (A ; RA1, RA2) pour additionner deux grandeurs électriques, dont l'une est une valeur de courant instantané (Im) enregistrée de la valeur moyenne (Imw) respectivement correspondante.

2. Circuit selon la revendication 1, dans lequel les moyens (A ; RA1, RA2) pour additionner deux grandeurs électriques sont constitués par deux résistances respectives (RA1 ; RA2) qui sont interconnectées par une de leurs extrémités et dont les autres extrémités respectives sont des entrées respectivement pour une des grandeurs électriques.

3. Circuit selon la revendication 1 ou 2, dans lequel les moyens (M ; CT, RT) pour former une valeur moyenne (Im) respective sont constitués par des circuits RC.

4. Circuit selon une des revendications précédentes, dans lequel un commutateur (GS) commandé est branché en amont d'au moins un moyen (M ; CT, RT) pour former des valeurs moyennes (Im).
